# EUROPEAN PATENT SPECIFICATION

(11) **EP 3 533 972 B1**
(45) Date of publication and mention of the grant of the patent: **30.09.2020**
(21) Application number: 19154081.4
(22) Date of filing: 29.01.2019
(51) Int. Cl.: F01D 9/02, F23R 3/42, F23R 3/60

(54) **GAS TURBINE COMBUSTOR AND TRANSITION PIECE ASSEMBLY**
GASTURBINENBRENNKAMMER UND ÜBERGANGSSTÜCKSANORDNUNG
CHAMBRE DE COMBUSTION DE TURBINE À GAZ ET ENSEMBLE DE PIÈCE DE TRANSITION

(30) Priority: 28.02.2018 JP 2018034887
(43) Date of publication of application: 04.09.2019
(73) Proprietor: Mitsubishi Hitachi Power Systems, Ltd., Yokohama-shi, Kanagawa 220-8401 (JP)
(72) Inventor: HAGITA, Tatsuya, Yokohama-shi, Kanagawa 220-8401 (JP); OKUYAMA, Noboru, Yokohama-shi, Kanagawa 220-8401 (JP); WADA, Yasuhiro, Yokohama-shi, Kanagawa 220-8401 (JP); WATANABE, Yasuyuki, Yokohama-shi, Kanagawa 220-8401 (JP); YOSHIDA, Shohei, Yokohama-shi, Kanagawa 220-8401 (JP)
(74) Representative: MERH-IP Matias Erny Reichl Hoffmann Patentanwälte PartG mbB

(56) References cited:
- EP-A1- 1 507 015
- WO-A1-2016/068857
- FR-A1- 2 422 037
- JP-A- S6 030 431
- US-A1- 2012 200 046

## Description

### [Technical Field]

The present invention concerns a gas turbine combustor and a transition piece assembly and, in particular, relates to the gas turbine combustor and the transition piece assembly which are favorable for the one that, on outer circumferences of coupled parts of a turbine stator vane of a gas turbine and a frame which is installed on an outlet part of a transition piece, a seal member for sealing so as not to flow compressed air from a compressor into the turbine side through a gap between the above-described coupled parts is installed.

### [Background Art]

In general, the gas turbine is configured by being equipped with the compressor, the combustor and the turbine and is made in such a manner that air compressed by the compressor is supplied to the combustor, the compressed air and a fuel supplied from other are mixed and burned to generate a combustion gas in the combustor and the combustion gas is expanded by the gas turbine.

A plurality of the combustors is installed in a circumferential direction of the turbine and a mixed fluid of the fuel and air is combusted in an upstream area of the transition piece in each combustor and the combustion gas is sent from the transition piece to a first-stage stator vane part on the gas turbine side.

Incidentally, since it is structured in such a manner that although the compressed air from the compressor is supplied to the combustor which is housed in a combustor casing, the compressed air is sent around the combustor including the transition piece, performs cooling and thereafter is supplied to the combustor, there has been a fear that the compressed air from the compressor might flow into the turbine side through a gap between the coupled parts of the transition piece and the first-stage stator vane part on the gas turbine side and operating efficiency of the gas turbine might be worsened due to a reduction in temperature of the combustion gas, useless consumption of the air which is not involved in combustion and so forth.

From such things, a seal member which seals the gap between the first-stage stator vane part on the turbine side and the outlet side of the transition piece is adopted on the coupled parts of the transition piece and the turbine side of the gas turbine combustor in such a manner that the compressed air from the compressor does not flow into the turbine side through a gap between the coupled parts and this seal member is generally mounted on the frame which is installed on the outlet part of the transition piece.

The ones that the seal member (including a floating seal material and a side seal material) which seals the gap between the first-stage stator vane part on the turbine side and the outlet side of the transition piece in such a manner that the compressed air from the above-described compressor does not flow into the turbine side through a gap between the coupled parts is mounted on the frame which is installed on the outlet part of the transition piece are described in Japanese Unexamined Patent Application Publication No. 2006-214671 (Patent Literature 1) and Japanese Unexamined Patent Application Publication No. 2003-193866 (Patent Literature 2).

In these Patent Literatures 1 and 2, it is disclosed that the transition piece is formed into a cylindrical shape at an inlet and into an inverted trapezoidal shape at an outlet, the frame of a shape which matches the inverted trapezoidal shape of the outlet of the transition piece is installed on the downstream side of this transition piece, the outlet side of the frame which is formed into the inverted trapezoidal shape is connected to the stator vane part on the turbine side and a frame seal groove is formed in an outer circumference on the outlet side of the aforementioned frame, the floating seal materials which are the seal members which float are engaged with top and bottom of this frame seal groove and the side seal materials which are the seal members are mounted on the both sides of the frame seal groove, and it is described that the floating seal material is engaged therewith with one end which is formed into a U-shape being inserted into the frame seal groove, an engagement side which extends at a right angle outward from an U-shaped leading end part is formed on the other end thereof and this engagement side is engaged therewith by being inserted into a stator vane seal groove which is formed in the first-stage stator vane part of the gas turbine which is located so as to face the frame on the downstream side of the transition piece.

US 2012/200046 A1 describes a system which is provided for sealing a gap between a transition exit frame and a vane rail at a turbine inlet. The system includes a seal with a compliant seal member having a generally u-shaped profile to provide a sealing function in an axial direction. The compliant seal member includes a U-shaped inner sheet securely pressed within a U-shaped outer sheet.

### [Summary of the Invention]

### [Technical Problem]

Incidentally, in the gas turbine combustors in the above-described Patent Literatures 1 and 2, when the floating seal material is made movable in the turbine circumferential direction and an axial direction with vibrations caused by combustion and flowing of the combustion gas, sliding occurs between the U-shaped leading end part of the floating seal material and the frame which is a mating-side member and, in particular, in a case where the vibration has generated in members which are inserted into the seal groove and built up by engagement as in Patent Literatures 1 and 2, there is a fear that wear may occur on contact parts of the mating members and wear damage may occur under a high temperature.

The present invention has been made in view of the above-described points and an object thereof is to provide a gas turbine combustor and a transition piece assembly which are able to suppress possible movement of the seal member in the turbine circumferential direction and the axial direction and to prevent occurrence of wear on the contact parts of the mating members even when there exist the vibrations caused by combustion and flowing of the combustion gas.

### [Solution to Problem]

The aforementioned object is solved by the invention according to the independent claims. Further preferred developments are described by the dependent claims. In particular, a gas turbine combustor of the present invention is the gas turbine combustor which is equipped with a transition piece assembly of the combustor, the transition piece assembly of the combustor includes a transition piece in which a high-temperature combustion gas flows, a frame which is installed on the downstream side (an outlet part) of the transition piece and a seal member which is installed on a coupled part of the aforementioned frame and a stator vane part on the turbine side and blocks flowing of compressed air from a compressor into the aforementioned turbine side through a gap of the coupled part, and a projection member is provided on an outer circumference of the aforementioned frame, a movement suppression mechanism for matching the aforementioned projection member and suppressing possible movement of the aforementioned seal member is provided on the aforementioned seal member, the aforementioned movement suppression mechanism and the aforementioned projection member fit together and thereby the aforementioned seal member is fixed to the frame.

In addition, in order to attain the above-described object, a transition piece assembly of the present invention is the transition piece assembly of a combustor which includes a transition piece in which a high-temperature gas flows, a frame which is installed on the downstream side (an outlet part) of the transition piece, and a seal member which is installed on a coupled part of the aforementioned frame and a turbine-side stator vane part and blocks flowing of compressed air from a compressor into the aforementioned turbine side through a gap of the aforementioned coupled part, a projection member is provided on an outer circumference of the aforementioned frame, a movement suppression mechanism for matching the aforementioned projection member and suppressing possible movement of the aforementioned seal member is provided on the aforementioned seal member, the aforementioned movement suppression mechanism and the aforementioned projection member fit together and thereby the aforementioned seal member is fixed to the frame.

### [Advantageous Effects of Invention]

According to the present invention, possible movement of the seal member in the turbine circumferential direction and the axial direction can be suppressed and thereby occurrence of wear on the contact parts of the mating members can be prevented even when there exist the vibrations caused by combustion and flowing of the combustion gas.

### [Brief Description of the Drawings]

Figure 1 is a diagram illustrating an entire configuration of a gas turbine combustor according to an embodiment 1 of the present invention.
Figure 2 is a perspective view illustrating the outlet side of a transition piece which is adopted in the embodiment 1 of the gas turbine combustor of the present invention by dismantling a seal member.
Figure 3 is a diagram illustrating a joined part between a frame of the transition piece and a first-stage stator vane of the turbine which are adopted in the embodiment 1 of the gas turbine combustor of the present invention.
Figure 4 is a partially enlarged diagram illustrating details of the joined part between the frame of the transition piece and the first-stage stator vane of the turbine in Fig. 3.
Figure 5 is a plan view illustrating a state where a projection member which is installed on the frame of the transition piece in Fig. 3 is fitted into a through-hole formed in a seal material.
Figure 6 is a diagram illustrating the seal material which is adopted in the embodiment 1 of the gas turbine combustor of the present invention.
Figure 7 is a plan view of Fig. 6.
Figure 8 is a partially enlarged diagram illustrating details of a joined part between a frame of a transition piece and a first-stage stator vane of the turbine which are adopted in an embodiment 2 of the gas turbine combustor of the present invention.
Figure 9 is a plan view illustrating a state where a projection member which is installed on the frame of the transition piece in Fig. 8 is fitted into a through-hole formed in a seal material via a wear resistance piece.
Figure 10 is a partially enlarged diagram illustrating details of a joined part between a frame of a transition piece and a first-stage stator vane of the turbine which are adopted in an embodiment 3 of the gas turbine combustor of the present invention.
Figure 11 is a diagram illustrating a seal material which is adopted in the embodiment 3 of the gas turbine combustor of the present invention.
Figure 12 is a plan view illustrating a state where a projection member which is installed on a frame of a transition piece in Fig. 11 is fitted into a notch formed in the seal material.

### [Description of Embodiments]

In the following, a gas turbine combustor and a transition piece of the present invention will be described on the basis of illustrated embodiments. Incidentally, in the respective embodiments which will be described in the following, the same symbols are used for the same components.

### Embodiment 1

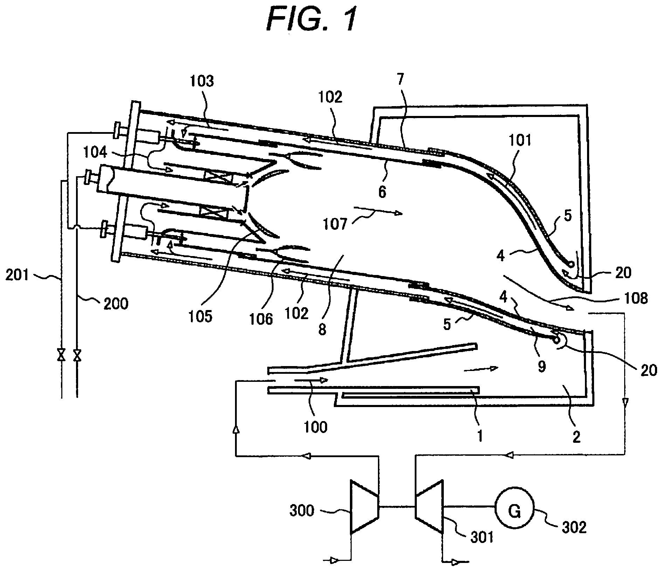

An entire configuration of a power-plant-oriented gas turbine combustor is illustrated in Fig. 1 as one example of the gas turbine combustor of the present invention.

As illustrated in Fig. 1, the gas turbine combustor is roughly configured by a transition piece 4 of the combustor in which a high-temperature combustion gas 107 flows, a transition piece flow sleeve 5 which is present around this transition piece 4 and includes the transition piece 4 therein, a flow passage 9 which is formed between this transition piece flow sleeve 5 and the transition piece 4 and through which high-temperature and high-pressure compressed air 100 which has been exhaled from a compressor 300 flows, a liner 6 which is connected to the transition piece 4 and a liner flow sleeve 7 which is connected to the transition piece flow sleeve 5, is installed concentrically on an outer circumference of the liner 6 and thereby forms a gap through which a flow 102 of the compressed air passes.

Then, the compressed air 100 which has been introduced from the compressor 300 is introduced into a casing 2 through a diffuser 1 and flows into a gap (the flow passage 9) which is formed by the transition piece flow sleeve 5 and the transition piece 4 (illustrated by an arrow 20).

That is, the compressed air 100 which has been introduced into the cashing 2 through the diffuser 1 becomes a flow 20 which enters the flow passage 9 which is formed by the transition piece flow sleeve 5 and the transition piece 4 through an opening formed in a downstream-side end of the transition piece flow sleeve 5.

Thereafter, the compressed air 100 which has flown into the flow passage 9 becomes a flow 102 which passes through the gap between the liner 6 and the liner flow sleeve 7 which is installed concentrically on the outer circumference of the liner 6 as indicated by a flow 101. Then, the flow is reversed, becomes flows 103, 104 which is introduced into a burner part, is mixed with a fuel supplied from fuel systems 200, 201, forms flames 105, 106 in a combustion chamber 8 in the liner 6 and becomes a high-temperature and high-pressure combustion gas 107. Thereafter, although it becomes a combustion gas 108 which is introduced from the transition piece 4 into a turbine 301, in the gas turbine, an output is obtained from a power generator 302 by converting an amount of work that the high-temperature and high-pressure combustion gas 108 generates when it adiabatically expands into axial rotation force in the turbine 301. Incidentally, the illustrated combustor is configured by a premixed combustion burner (a main burner) and a diffusion combustion burner (a pilot burner), the fuel system which supplies the fuel to the premixed burner is displayed as the symbol 201 and the fuel system which supplies the fuel to the diffusion combustion burner is displayed as the symbol 200.

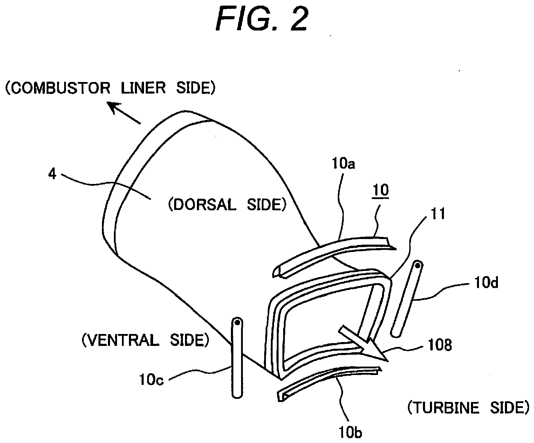

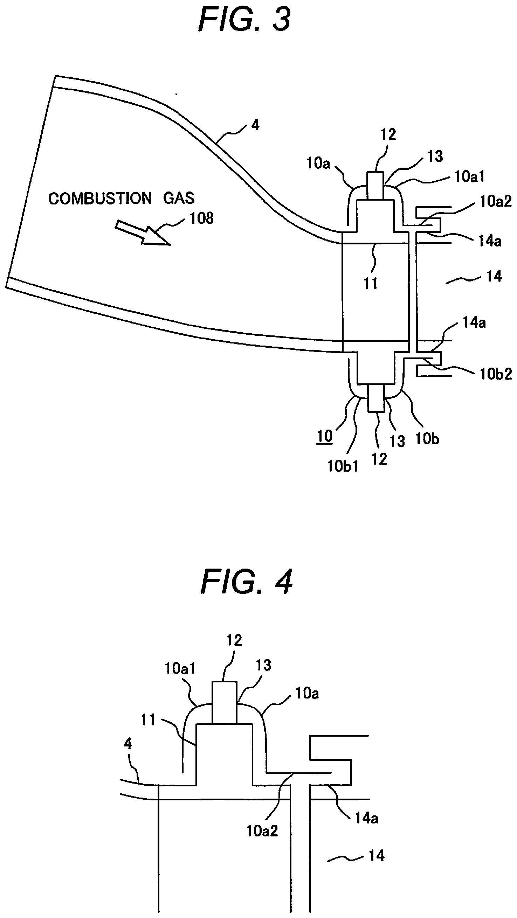

Incidentally, although the compressed air 100 from the compressor 300 is supplied to the combustor, it is structured in such a manner that the compressed air 100 is sent around the combustor including the transition piece 4, performs cooling and thereafter is supplied to the combustor. Then, when the compressed air 100 from the compressor 300 leaks to the turbine side through a gap between coupled parts of the transition piece 4 and a first-stage stator vane part 14 on the turbine side (see Fig. 3), a leaking portion thereof does not contribute to cooling of the transition piece 4 and generation of the combustion gas 107 and becomes a factor of lowering operating efficiency of the gas turbine. Therefore, a seal member 10 (see Fig. 2 and Fig. 3) which seals the gap between the first-stage stator vane part 14 on the turbine side and the outlet side of the transition piece 4 is adopted on the coupled parts of the transition piece 4 and the turbine side of the gas turbine combustor in such a manner that the compressed air 100 from the compressor 100 does not flow out to the turbine side through a gap between the coupled parts and, in general, this seal member 10 is mounted on a frame 11 (see Fig. 2 and Fig. 3) which is installed on the outlet part of the transition piece 4.

The seal member 10 and the frame 11 will be described by using Fig. 2. Fig. 2 illustrates details of the outlet side of the transition piece 4.

As illustrated in Fig. 2, the seal member 10 includes floating seal materials 10a, 10b and side seal materials 10c, 10d, the transition piece 4 is formed into a cylindrical shape at an inlet (the combustor liner side) of the combustion gas and into an inverted trapezoidal shape at an outlet (the turbine side), the frame 11 of a shape which matches the inverted trapezoidal shape of the outlet of the transition piece 4 is installed on the downstream side (the turbine side) of this transition piece 4 and the outlet side of the frame 11 which is formed into the inverted trapezoidal shape is connected to the first-stage stator vane part 14 (a turbine inlet part) on the turbine side. Then, the floating seal materials 10a, 10b are mounted on the upper and lower sides (the radial-direction inner side and outer side) of this frame 11 and the side seal materials 10c, 10d are mounted on the lateral sides thereof.

Next, a structure of fixing the seal member 10 to the frame 11 in the present embodiment will be described by using Fig. 3, Fig. 4, Fig. 5, Fig. 6 and Fig. 7.

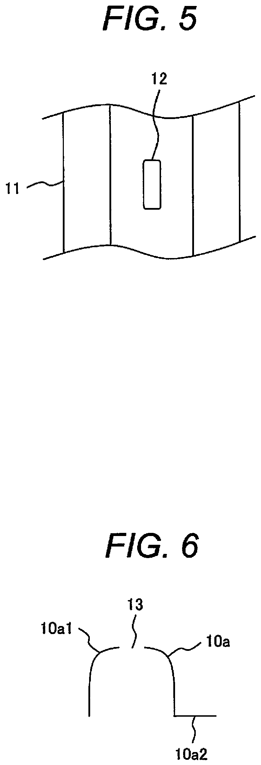

As illustrated in Fig. 3 and Fig. 4, in the present embodiment, a projection member 12 (see Fig. 5) which extends outward and inward (a top-bottom direction in Fig. 3 and Fig. 4) in a radius direction of the transition piece 4 is provided on an outer circumference of the frame 11 and a through-hole 13 (an opening of a shape corresponding to an outer shape of the projection member 12 viewing from an extending direction) which matches this projection member 12 is provided in the floating seal materials 10a, 10b, the projection member 12 is fitted into the through-hole 13 in the floating seal materials 10a, 10b and thereby the floating seal materials 10a, 10b are fixed.

The above-described floating seal materials 10a, 10b are configured by fix parts 10a1, 10b1 which are fixed to the frame 11 and seal parts 10a2, 10b2 which seal between the coupled parts of the transition piece 4 and the turbine. The fix parts 10a1, 10b1 are formed into, for example, U-shapes such as those illustrated in Fig. 3, Fig. 4 which are shapes which arcuately curve along protruded parts which are provided on the radius-direction inner side and outer side of the frame 11. In addition, the through-hole 13 is formed in the fix parts 10a1, 10b1 at positions where it corresponds to the aforementioned projection member 12 when mounted on the frame 11. In examples illustrated in Fig. 3, Fig. 4, the through-hole 13 is formed at positions on top parts of the fix parts 10a1, 10b1 which curve into the U-shapes.

In addition, the seal parts 10a2, 10b2 which seal the coupled parts of the transition piece 4 and the turbine inlet are connected to the downstream sides (right-hand sides of Fig. 3, Fig. 4) of the fix parts 10a1, 10b1. These seal parts 10a2, 10b2 are engagement pieces which bend at a right angle from terminal parts on the downstream sides of the U-shaped fix parts 10a1, 10b1 and extend to the downstream sides along an outer surface of the outlet part of the frame 11.

Then, a seal groove 14a whose opening part is formed on the upstream side of a combustion gas flowing direction is provided in a face which faces the frame 11 on the turbine side. This seal groove 14a is formed in the face which faces the frame 11 by extending in a circumferential direction of the turbine. The downstream sides of the seal parts 10a2, 10b2 of the floating seal materials 10a, 10b are inserted into the seal groove 14a. The seal parts 10a2, 10b2 are fitted into this seal groove 14a and thereby a gap in a bonded part which is formed along the circumferential direction of the turbine is sealed. In addition, since the projection member 12 is fitted into the through-hole 13, movement of the floating seal materials 10a, 10b relative to the circumferential direction of the turbine can be restricted.

Thereby, it is structured in such a manner that the compressed air 100 is prevented from flowing into the turbine flow passage through an axial-direction gap between the coupled parts of the frame 11 on the downstream side of the transition piece 4 and the first-stage stator vane part 14 (see Fig. 3) on the gas turbine side and the floating seal materials 10a, 10b do not fall off.

The shape of the above-described projection member q12 is, for example, a rectangular parallelepiped shape and is the one that rounding is performed on a side-face side thereof. In addition, even when the shape of the projection member 12 is columnar and the number of the projection members 12 is two or more, the effect of the present embodiment is not impaired.

Incidentally, the turbine circumferential-direction inner circumference side (the ventral side) and outer circumference side (the dorsal side) of the frame 11 illustrated in Fig. 2 are formed into shapes which bend in a circular arc so as to match the flow passage in which the first-stage stator vane 14 on the turbine side is installed.

Owing to the configuration of the present embodiment like this, that is, owing to fitting of the projection member 12 provided on the frame 11 and the through-hole 13 formed in the floating seal materials 10a, 10b, possible movement of the floating seal materials 10a, 10b in the turbine circumferential direction and axial direction is suppressed.

In addition, since the turbine circumferential-direction possible movement of the floating seal materials 10a, 10b is determined only by fitting faces of the through-hole 13 and the projection member 12, a turbine circumferential-direction possible movement range, that is, position accuracy of the floating seal materials 10a, 10b can be managed only by management of accuracy of the fitting faces of the through-hole 13 and the projection member 12.

Therefore, according to the configuration of the present embodiment, suppression of amounts of the turbine circumferential-direction possible movement of the floating seal materials 10a, 10b is facilitated and it is advantageous for maintaining the position accuracy high.

In addition, when incorporating the transition piece 4 into the casing 2 of the gas turbine, even when a space in the casing 2 is small, the floating seal materials 10a, 10b and the side seal materials 10c, 10d can be incorporated thereinto by mounting in advance the floating seal materials 10a, 10b and the side seal materials 10c, 10d on the frame 11.

At this time, gaps that tolerance for incorporation is taken into consideration in the turbine circumferential direction are necessary between the adjacent floating seal materials 10a, 10b in order not to allow contact of the mating floating seal materials 10a, 10b of the adjacent combustor cans.

Since in the present embodiment, since the position accuracy of the floating seal materials 10a, 10b in the turbine circumferential direction can be maintained high by holding the floating seal materials 10a, 10b by fitting of the projection member 12 and the through-hole 13, the turbine circumferential-direction gaps between the adjacent floating seal materials 10a, 10b can be made small. As a result, sealability can be maintained high and low NOx and backfire prevention can be realized.

Further, the possible movement amounts of the floating seal materials 10a, 10b are made small and thereby sliding distances of the floating seal materials 10a, 10b relative to the frame 11 become small. Therefore, amounts of wear on contact faces of the floating seal materials 10a, 10b and the frame 11 can be reduced and life elongation of the floating seal materials 10a, 10b and the frame 11 can be realized.

According to the present embodiment like this, it is a matter of course that occurrence of wear on contact parts of mating members can be prevented by suppressing the possible movement of the floating seal materials 10a, 10b in the turbine circumferential direction and axial direction even when there exist vibrations caused by combustion and flowing of the combustion gas, and the turbine circumferential-direction position accuracy of the floating seal materials 10a, 10b can be maintained high, there is an effect of lowering NOx and preventing backfire owing to easy assembly and high seal performance and further the transmission piece of the gas turbine combustor which attains life elongation can be realized.

### Embodiment 2

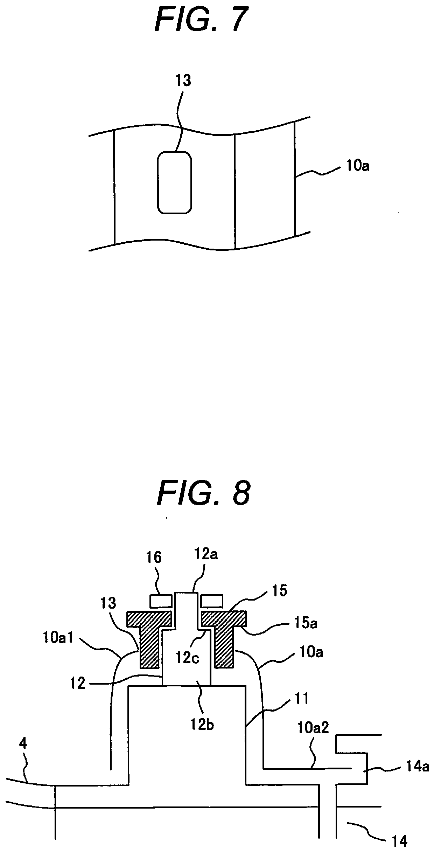

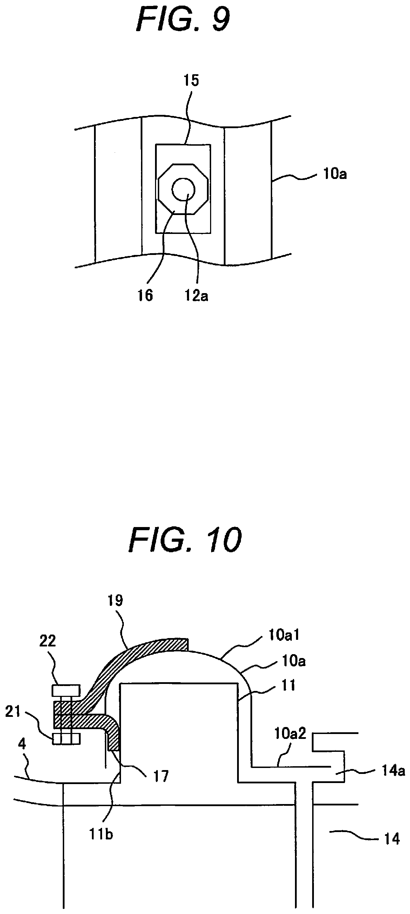

Next, the embodiment 2 of the gas turbine combustor of the present invention will be described by using Fig. 8 and Fig. 9.

In the present embodiment illustrated in the drawings, it is characterized in that the projection member 12 is inserted into the through-hole 13 in the floating seal material 10a (10b) via a wear resistance piece 15 and thereby the floating seal material 10a (10b) is fixed.

Specifically, it has the projection member 12 which extends in the radius direction (the top-bottom direction in Fig. 8) of the transition piece 4, a radius-direction leading end part is made thinner than the frame 11 side and thereby a stepped part 12c is formed on this projection member 12, a male screw 12a is threaded in the leading end part of the projection member 12, a nut 16 is engaged with the male screw 12a portion and it is fastened therewith and thereby the floating seal material 10a (10b) is fixed to the stepped part 12c of the projection member 12 via the wear resistance piece 15 which is inserted into the leading end part of the projection member 12.

Further, a face 15a which prevents falling of the floating seal material 10a (10b) is formed on a face of the wear resistance piece 15 which is in contact with the stepped part 12c of the projection member 12 on the side opposite to a face which is fastened with the nut 16.

In addition, also in the present embodiment, similarly to the embodiment 1, the transition piece 4 is formed into the cylindrical shape at the inlet (the combustor liner side) of the combustion gas and into the inverted trapezoidal shape at the outlet (the turbine side), the frame 11 of the shape which matches the inverted trapezoidal shape of the outlet of the transition piece 4 is installed on the downstream side (the turbine side) of this transition piece 4 and the outlet side of the frame 11 which is formed into the inverted trapezoidal shape is connected to the first-stage stator vane part 14 (the turbine inlet part) on the turbine side. Then, the floating seal materials 10a (10b) are mounted on the upper and lower sides (the radial-direction inner side and outer side) of this frame 11 and the side seal materials 10c, 10d are mounted on the lateral sides thereof.

In addition, the floating seal material 10a (10b) of the present embodiment is configured by the fix part 10a1 (10b1) which is fixed to the frame 11 and the seal part 10a2 (10b2) which seals between the coupled parts of the transition piece 4 and the turbine similarly to the embodiment 1. The fix part 10a1 (10b1) is formed into, for example, the U-shape such as that illustrated in Fig. 8 which is the shape which arcuately curves along the protruded part which is provided on the radius-direction inner side and outer side of the frame 11. In addition, the through-hole 13 is formed in the fix part 10a1 (10b1) at the position where it corresponds to the aforementioned projection member 12 when mounted on the frame 11. In an example in Fig.8, the through-hole 13 is formed at the position on the top part of the fix part 10a1 (10b1) which curves into the U-shape.

In addition, the seal part 10a2 (10b2) which seals the coupled parts of the transition piece 4 and the turbine inlet is connected to the downstream side (the right-hand side of Fig. 8) of the fix part 10a1 (10b1). This seal part 10a2 (10b2) is the engagement piece which bends at a right angle from the terminal part on the downstream side of the U-shaped fix part 10a1 (10b1) and extends to the downstream side along the outer surface of the outlet part of the frame 11.

Then, the seal groove 14a whose opening part is formed on the upstream side of the combustion gas flowing direction is provided in the face which faces the frame 11 on the turbine side. This seal groove 14a is formed in the face which faces the frame 11 by extending in the turbine circumferential direction. The downstream side of the seal part 10a2 (10b2) of the floating seal material 10a (10b) is inserted into the seal groove 14a. The seal part 10a2 (10b2) is fitted into this seal groove 14a and thereby the gap in the bonded part which is formed along the turbine circumferential direction is sealed. In addition, since the projection member 12 is fitted into the through-hole 13, the movement of the floating seal material 10a (10b) relative to the turbine circumferential direction can be restricted.

Thereby, it is structured in such a manner that the compressed air 100 is prevented from flowing into the turbine flow passage through the axial-direction gap between the coupled parts of the frame 11 on the downstream side of the transition piece 4 and the first-stage stator vane part 14 (see Fig. 8) on the gas turbine side and the floating seal material 10a (10b) does not fall off.

Further, a root part 12b of the projection member 12 in the present embodiment is formed into a rectangular parallelepiped shape and rounding is performed on a corner of a side face of this rectangular parallelepiped root part 12b of the projection member 12.

The possible movement of the floating seal material 10a (10b) in the turbine circumferential direction and axial direction is determined only by fitting faces of the through-hole 13 formed in the above-described floating seal material 10a (10b) and the wear resistance piece 15 and the fitting faces of the wear resistance piece 15 and the projection member 12.

Therefore, since the turbine circumferential-direction possible movement range, that is, the position accuracy of the floating seal material 10a (10b) can be managed only by management of the accuracy of the fitting faces of the aforementioned three members (the wear resistance piece 15, the projection member 12, the floating seal material 10a (10b)), suppression of the amount of the turbine circumferential-direction possible movement of the floating seal material 10a (10b) is facilitated by making into the structure of the present embodiment and it is advantageous for maintaining the position accuracy high.

In addition, when incorporating the transition piece 4 into the casing 2 of the gas turbine, even when the space in the casing 2 is small, the floating seal materials 10a, 10b and the side seal materials 10c, 10d can be incorporated thereinto by mounting in advance the floating seal materials 10a, 10b and the side seal materials 10c, 10d on the frame 11.

At this time, the gaps that the tolerance for incorporation is taken into consideration in the turbine circumferential direction are necessary between the adjacent floating seal materials 10a, 10b in order not to allow contact of the mating floating seal materials 10a, 10b of the adjacent combustor cans.

In the present embodiment, the position accuracy of the floating seal material 10a (10b) in the turbine circumferential direction can be maintained high by holding the floating seal materials 10a (10b) by fitting of the projection member 12 and the wear resistance piece 15 and the through-hole 13 and thereby the turbine circumferential-direction gap between the adjacent floating seal materials 10a (10b) can be made small. As a result, the sealability can be maintained high and the low NOx and the backfire prevention can be realized.

Further, the possible movement amount is made small by making the gap between the floating seal material 10a (10b) and the wear resistance piece 16 and the gap between the wear resistance piece 15 and the projection member 12 small and thereby the sliding distance of the floating seal material 10a (10b) relative to the frame 11 becomes small.

Therefore, the amounts of wear on the contact faces of the floating seal material 10a (10b) and the frame 11 can be reduced and the life elongation of the floating seal material 10a (10b) and the frame 11 can be realized.

In addition, the face 15a for preventing falling of the floating seal material 10a (10b) is formed on the wear resistance piece 15 and thereby falling of the floating seal material 10a (10B) can be prevented when incorporating the transition piece 4 and incorporation of the transition piece 4 is more facilitated.

In addition, since the wear resistance piece 15 is fixed with the male screw 12a and the nut 16, detachment of the floating seal material 10a (10b) and the wear resistance piece 15 is easy in comparison with fixing by welding. In particular, on a site of the gas turbine, the floating seal material 10a (10b) and the wear resistance piece 15 can be replaced with other ones with no need of a welding technology and short-time and low-cost maintenance can be realized.

In addition, since contact between the projection member 12 and the floating seal material 10a (10b) can be prevented by the wear resistance piece 15 and a contact area of a member which is in contact with the projection member 12 can be made large in comparison with a case of the floating seal material 10a (10b), a surface pressure on the fitting face of the projection member 12 can be made small, an amount of wear damage on the projection member 12 is reduced and the life thereof can be elongated.

Further, it is desirable to select a combination of materials of the wear resistance piece 15, the floating seal material 10a (10b) which is advantageous for wear resistance and, for example, the combination of mating HS25 and HS25 is given. HS25 is carbide-precipitation-strengthened type cobalt-based alloy (L605, AMS-5537/AMS-5796, UNS R30605). In addition, it is also desirable to select the combination which is advantageous for the wear resistance as the combination of the materials of the wear resistance piece 15 and the projection member 12 and, for example, the mating HS25 and HS25 are given.

According to the present embodiment like this, it is a matter of course that occurrence of the wear on the contact parts of the mating members can be prevented by suppressing the possible movement of the floating seal materials 10a, 10b in the turbine circumferential direction and axial direction even when there exist the vibrations caused by combustion and flowing of the combustion gas, and the turbine circumferential-direction position accuracy of the floating seal materials 10a, 10b can be maintained high, there is the effect of lowering NOx and preventing the backfire owing to the easy assembly and the high seal performance and further the transmission piece of the gas turbine combustor which attains the life elongation can be realized.

### Embodiment 3

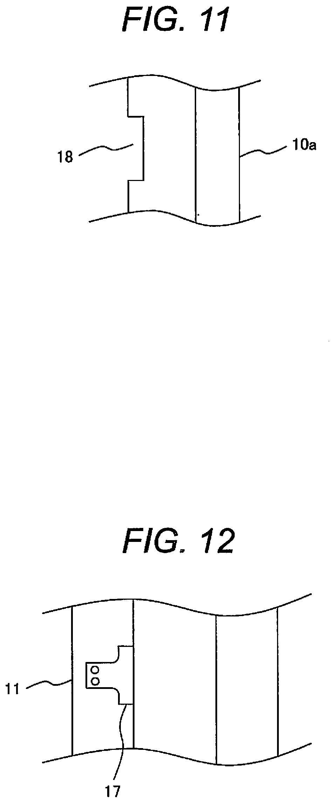

Next, the embodiment 3 of the gas turbine combustor of the present invention will be described by using Fig. 10, Fig. 11 and Fig. 12.

In the present embodiment illustrated in the drawings, it is characterized in that a projection member 17 which extends to the combustor liner side (a left-hand direction in Fig. 10) which is the upstream side of a gas distribution direction of the transition piece 4 is provided on the outer circumference of the frame 11, a notch 18 which matches this projection member 17 is formed in the floating seal material 10a (10b), the projection member 17 is fitted into the notch 18 in the floating seal material 10a (10b) and thereby the floating seal material 10a (10b) is fixed.

In addition, in the present embodiment, a bolt-use hole is formed in a leading end of the projection member 17 and further it is equipped with a fall prevention piece 19 that one side covers part of the floating seal material 10a (10b) and thereby prevents falling of the floating seal material 10a (10b) in a radius direction (an upward direction in Fig. 10) of the transition piece 4 and other side end is fixed together with the projection member 17 with a bolt and a nut 21 via the bolt-use hole.

Incidentally, the projection member 17 which extends to the combustor liner side of the transition piece 4 is formed integrally with the frame 11 or is fixed to the frame 11 by welding.

In addition, also in the present embodiment, similarly to the embodiments 1 and 2, the transition piece 4 is formed into the cylindrical shape at the inlet (the combustor liner side) of the combustion gas and into the inverted trapezoidal shape at the outlet (the turbine side), the frame 11 of the shape which matches the inverted trapezoidal shape of the outlet of the transition piece 4 is installed on the downstream side (the turbine side) of this transition piece 4 and the outlet side of the frame 11 which is formed into the inverted trapezoidal shape is connected to the first-stage stator vane part 14 (the turbine inlet part) on the turbine side. Then, the floating seal materials 10a (10b) are mounted on the upper and lower sides (the radial-direction inner side and outer side) of this frame 11 and the side seal materials 10c, 10d are mounted on the lateral sides thereof.

In addition, the above-described floating seal material 10a (10b) is configured by the fix part 10a1 (10b1) which is fixed to the frame 11 and the seal part 10a2 (10b2) which seals between the coupled parts of the transition piece 4 and the turbine similarly to the embodiments 1 and 2. The fix part 10a1 (10b1) is formed into, for example, the U-shape such as that illustrated in Fig. 10 which is the shape which arcuately curves along the protruded part which is provided on the radius-direction outer side and inner side of the frame 11. In addition, the notch 18 is formed in the fix part 10a1 (10b1) at the position where it corresponds to the aforementioned projection member 17 when mounted on the frame 11. In an example in Fig. 10, the notch 18 is formed at a lateral position of the fix part 10a1 (10b1) which curves into the U-shape.

In addition, the seal part 10a2 (10b2) which seals the coupled parts of the transition piece 4 and the turbine inlet is connected to the downstream side (the right-hand side of Fig. 10) of the fix part 10a1 (10b1). This seal part 10a2 (10b2) is the engagement piece which bends at a right angle from the terminal part on the downstream side of the U-shaped fix part 10a1 (10b1) and extends to the downstream side along the outer surface of the outlet part of the frame 11.

Then, the seal groove 14a whose opening part is formed on the upstream side of the combustion gas flowing direction is provided in the face which faces the frame 11 on the turbine side. This seal groove 14a is formed in the face which faces the frame 11 by extending in the turbine circumferential direction. The downstream side of the seal part 10a2 (10b2) of the floating seal material 10a (10b) is inserted into the seal groove 14a. The seal part 10a2 (10b2) is fitted into this seal groove 14a and thereby the gap in the bonded part which is formed along the turbine circumferential direction is sealed. In addition, since the projection member 17 is fitted into the notch 18, the movement of the floating seal material 10a (10b) relative to the turbine circumferential direction can be restricted.

Thereby, it is structured in such a manner that the compressed air 100 is prevented from flowing into the turbine flow passage through the axial-direction gap between the coupled parts of the frame 11 on the downstream side of the transition piece 4 and the first-stage stator vane part 14 (see Fig. 10) on the gas turbine side and the floating seal material 10a (10b) does not fall off.

As described above, the bolt-use hole used for attaching the fall prevention piece 19 is provided in the leading end of the projection member 17, the fall prevention piece 19 is fixed together with the projection member 17 with the bolt 22 and the nut 21 via the bolt-use hole and falling of the floating seal material 10a (10b) in the radial direction is prevented by the fall prevention piece 19.

Incidentally, the floating seal material 10a (10b) may be pressed against the first-stage stator vane part 14 side on the axial-direction turbine side by the fall prevention piece 19 so as to bring the floating seal material 10a (10b) into contact with an axial-direction combustor-side side face 11b of the frame 11.

In the present embodiment, the turbine circumferential-direction possible movement of the floating seal material 10a (10b) is suppressed by fitting of the projection member 17 and the notch 18 formed in the floating seal material 10a (10b).

That is, since the turbine circumferential-direction possible movement of the floating seal material 10a (10b) is determined only by the fitting faces of the notch 18 formed in the floating seal material 10a (10b) and the projection member 17, the turbine circumferential-direction possible movement range, that is, the position accuracy of the floating seal material 10a (10b) can be managed only by management of the accuracy of the fitting faces of the notch 18 and the projection member 17.

Therefore, suppression of the amount of the turbine circumferential-direction possible movement of the floating seal material 10a (10b) is facilitated by forming into the structure of the present embodiment and it is advantageous for maintaining the position accuracy high.

In addition, when incorporating the transition piece 4 into the casing 2 of the gas turbine, even when the space in the casing 2 is small, the floating seal materials 10a, 10b and the side seal materials 10c, 10d can be incorporated thereinto by mounting in advance the floating seal materials 10a, 10b and the side seal materials 10c, 10d on the frame 11.

At this time, the gaps that the tolerance for incorporation is taken into consideration in the turbine circumferential direction are necessary between the adjacent floating seal materials 10a, 10b in order not to allow contact of the mating floating seal materials 10a, 10b of the adjacent combustor cans.

Since in the present embodiment, the floating seal material 10a (10b) is held by fitting of the projection member 17 and the notch 18, the position accuracy of the floating seal material 10a (10b) in the turbine circumferential direction can be maintained high and the turbine circumferential-direction gap between the adjacent floating seal materials 10a (10b) can be made small. As a result, the sealability can be maintained high and the low NOx and the backfire prevention can be realized.

Further, the possible movement amount of the floating seal material 10a (10b) is made small and thereby the sliding distance of the floating seal material 10a (10b) relative to the frame 11 becomes small. Therefore, the amounts of wear on the contact faces of the floating seal material 10a (10b) and the frame 11 can be reduced and the life elongation of the floating seal material 10a (10b) and the frame 11 can be realized.

In addition, since the floating seal material 10a (10b) does not fall off by the fall prevention piece 19 when incorporating the transition piece 4, incorporation of the transition piece 4 is more facilitated.

In addition, since the fall prevention piece 19 is fixed to the leading end of the projection member 17 together with the projection member 17 with the bolt 22 and the nut 21, detachment of the fall prevention piece 19 and the floating seal material 10a (10b) is easy in comparison with fixing by welding. In particular, on the site of the gas turbine, the floating seal material 10a (10b) and the fall prevention piece 19 can be replaced with other ones with no need of the welding technology and the short-time and low-cost maintenance can be realized.

In addition, when the floating seal material 10a (10b) is pressed against the first-stage stator vane part 14 side on the axial-direction turbine side by the fall prevention piece 19 so as to bring the floating seal material 10a (10b) into contact with the frame 11, the axial-direction possible movement of the floating seal material 10a (10b) relative to the frame 11 is suppressed.

Thereby, since the distance of sliding of the floating seal material 10a (10b) relative to the frame 11 becomes small, the wear amounts of the floating seal material 10a (10b) and the frame 11 become small and thereby the life elongation of the floating seal material 10a (10b) and the frame 11 can be realized.

In addition, in a case where the floating seal material 10a (10b) is pressed against the first-stage stator vane part 14 side on the axial-direction turbine side by the fall prevention piece 19 so as to bring the floating seal material 10a (10b) into contact with the frame 11, since the gap on the axial-direction combustor liner side is closed in the gaps between the frame 11 and the floating seal material 10a (10b), a leak path of the compressed air 100 becomes small. Thereby, the sealability is improved and the low NOx and the backlash prevention can be realized.

Further, it is desirable to select the combination of the materials of the projection member 17 and the floating seal material 10a (10b) which is advantageous for the wear resistance and, for example, the combination of the mating HS25 and HS25 is given.

According to the present embodiment like this, it is a matter of course that even when there exist the vibrations caused by combustion and flowing of the combustion gas, occurrence of the wear on the contact parts of the mating members can be prevented by suppressing the possible movement of the floating seal materials 10a, 10b in the turbine circumferential direction and axial direction, and the turbine circumferential-direction position accuracy of the floating seal materials 10a, 10b can be maintained high, there is the effect of lowering NOx and preventing the backfire owing to the easy assembly and the high seal performance and further the transmission piece of the gas turbine combustor which attains the life elongation can be realized.

Incidentally, the present invention is not limited to the above-described embodiments and various modified examples are included. For example, the above-described embodiments are the ones described in detail for the purpose of comprehensively describing the present invention and it is not necessarily limited to the one which is equipped with all the configurations which have been described. In addition, it is possible to replace par of a configuration of one embodiment with a configuration of another embodiment and it is also possible to add a configuration of another embodiment to a configuration of one embodiment. In addition, it is possible to add, delete and replace another configuration to, from and with part of one configuration of each embodiment.

### [Reference Signs List]

1 ... diffuser, 2 ... casing, 4 ... transition piece, 5 ... transition piece flow sleeve, 6 ... liner, 7 ... liner flow sleeve, 8 ... combustion chamber, 9 ... flow passage formed by the transition piece and the transition piece flow sleeve, 10 ... seal member, 10a, 10b ... floating seal material, 10c, 10d ... side seal material, 10a1, 10b1 ... fix part of the floating seal material, 10a2, 10b2 ... seal part of the floating seal material, 11 ... frame, 12, 17 ... projection member, 12a ... male screw of the projection member, 12b ... root part of the projection member, 12c ... stepped part of the projection member, 13 ... through-hole, 14 ... turbine-side first-stage stator vane part, 14a ... seal groove, 15 ... wear resistance piece, 15a ... face of the wear resistance piece for preventing falling of the floating seal material, 16, 21 ... nut, 18 ... notch, 19 ... fall prevention piece, 22 ... bolt, 100 ... compressed air, 105, 106 ... flame, 107, 108 ... combustion gas, 200, 201 ... fuel system, 300 ... compressor, 301 ... turbine, 302 ... power generator.

## Claims

1. A transition piece assembly of a combustor, comprising:
a transition piece (4);
a frame (11) installed on the downstream side of the transition piece (4); and
a seal member (10, 10a, 10b, 10c, 10d) installed on a coupled part of the frame (11) and a turbine-side stator vane part (14), the seal member (10, 10a, 10b, 10c, 10d) blocking flowing of compressed air from a compressor to a turbine side through a gap of the coupled part,
a projection member (12) provided on an outer circumference of the frame (11); and
a movement suppression mechanism (13) provided on the seal (10, 10a, 10b) and fitted to the projection member (12) so as to suppress a movement of the seal (10, 10a, 10b), thereby fixing the seal (10, 10a, 10b) to the frame (11), **characterized in that**
the projection member (12) extends in a radius direction of the transition piece (4) and the movement suppression mechanism (13) is a through-hole (13) which matches the projection member (12), the projection member (12) is fitted into the through-hole (13) and thereby the seal member (10a, 10b) is fixed to the frame (11).

2. A gas turbine combustor comprising:
a transition piece assembly including a transition piece (4);
a transition piece flow sleeve (5) provided around the transition piece (4);
a liner (6) connected to the transition piece (4); and
a liner flow sleeve (7) provided around the liner (6),
wherein the transition piece assembly according to claim 1 is employed as the aforementioned transition piece assembly.

3. The gas turbine combustor according to claim 2,
wherein the seal member (10) includes floating seal materials (10a, 10b) and side seal materials (10c, 10d), the transition piece (4) is formed into a cylindrical shape at an inlet of the combustion gas and into an inverted-trapezoidal shape at an outlet thereof, the frame (11) of a shape which matches the inverted-trapezoidal shape of the outlet of the transition piece (4) is installed on the downstream side of the transition piece (4), the outlet side of the frame (11) which is formed into the inverted-trapezoidal shape is connected to the turbine-side stator vane part (14), and the floating seal materials (10a, 10b) are mounted on the upper and lower sides of the frame (11) and the side seal materials (10c, 10d) are mounted on the lateral sides thereof,
the through-hole (13) is formed in at least one of the floating seal materials (10a, 10b), the projection member (12) is fitted into the through-hole (13) and thereby at least one of the floating seal materials (10a, 10b) is fixed to the frame (11),
the floating seal materials (10a, 10b) are configured by a fix part (10a1, 10b1) which is fixed to the frame (11) and a seal part (10a2, 10b2) which seals between the coupled part of the frame (11) and the turbine-side stator vane part (14) and the seal part (10a2, 10b2) is fitted into a seal groove (14a) which is formed in the turbine-side stator vane part (14).

4. The gas turbine combustor according to claim 3,
wherein the seal part (10a2, 10b2) is connected to the downstream side of the fix part (10a1, 10b1) and the seal part (10a2, 10b2) is an engagement piece which bends at a right angle from a downstream-side terminal portion of the fix part (10a1, 10b1) and extends to the downstream side along an outer surface of the outlet part of the frame (11).

5. The gas turbine combustor according to any one of claims 3 to 4,
wherein the projection member (12) is formed into a rectangular parallelepiped shape or a columnar shape and rounding is performed on a side-face side of the projection member (12) of the rectangular parallelepiped shape.

6. The gas turbine combustor according to claim 3,
wherein the projection member (12) is fitted into the through-hole (13) in the seal member (10a, 10b) via a wear resistance piece (15) and thereby the seal member is fixed to the frame (11).

7. The gas turbine combustor according to claim 6,
wherein the projection member (12) which extends in the radius direction of the transition piece (4) is made thinner than the frame side at a radius-direction leading end part and thereby a stepped part (12c) is formed, a male screw (12a) is threaded in the leading end part of the projection member (12) and the seal member (10a, 10b) is fixed to the stepped part (12c) of the projection member (12) via the wear resistance piece (15) which is provided at the leading end part of the projection member (12) by fastening a nut (16) with the male screw part (12a).

8. The gas turbine combustor according to claim 7,
wherein the wear resistance piece (15) is provided with a fall preventing face (15a) which prevents falling of at least one of the floating seal material (10a, 10b) and the fall preventing face (15a) is formed on a face (15a) of the wear resistance piece (15) which is in contact with the stepped part (12c) of the projection member (12) on the opposite side of a face which is fastened with the nut (16).

9. The gas turbine combustor according to any one of claims 6 to 8,
wherein a root part (12b) of the projection member (12) is formed into a rectangular parallelepiped shape and rounding is performed on a corner of a side face of the projection member (12) of the rectangular parallelepiped shape.

10. A transition piece assembly of a combustor, comprising:
a transition piece (4);
a frame (11) installed on the downstream side of the transition piece (4); and
a seal member (10, 10a, 10b, 10c, 10d) installed on a coupled part of the frame (11) and a turbine-side stator vane part (14), the seal member (10, 10a, 10b, 10c, 10d) blocking flowing of compressed air from a compressor to a turbine side through a gap of the coupled part,
a projection member (17) provided at the upstream side of the frame (11); and
a movement suppression mechanism (18) provided on the seal (10a, 10b) and is fitted to the projection member (17) so as to suppress a movement of the seal (10a, 10b), thereby fixing the seal (10a, 10b) to the frame (11), wherein the projection member (17) extends to the upstream side of a gas flow direction of the transition piece (4), the movement suppression mechanism (18) is a notch (18) which matches the projection member (17), and the projection member (17) is fitted into the notch (18) and thereby the seal member (10a, 10b) is fixed to the frame (11), **characterized in that**
a bolt-use hole is formed in an leading end part of the projection member (17), a fall prevention piece (19) is provided at the projection member (17), and one side of the fall prevention piece (19) covers a part of the seal member (10a, 10b) thereby preventing falling of the seal member (10a, 10b) in the radius direction of the transition piece (4) and other side end of the fall prevention piece (19) is fixed together with the projection member (17) with a bolt (22) and a nut (21) via the bolt-use hole.

11. A gas turbine combustor comprising:
a transition piece assembly including a transition piece (4);
a transition piece flow sleeve (5) provided around the transition piece (4);
a liner (6) connected to the transition piece (4); and
a liner flow sleeve (7) provided around the liner (6),
wherein the transition piece assembly according to claim 10 is employed as the aforementioned transition piece assembly.

12. The gas turbine combustor according to claim 11,
wherein the projection member (17) which extends to the upstream side of the gas flow direction of the transition piece (4) is formed integrally with the frame (11) or is fixed to the frame (11) by welding.

13. The gas turbine combustor according to any one of claims 11 to 12,
wherein the seal member (10) includes floating seal materials (10a, 10b) and side seal materials (10c, 10d), the transition piece (4) is formed into a cylindrical shape at an inlet of the combustion gas and into an inverted-trapezoidal shape at an outlet thereof, the frame (11) of a shape which matches the inverted-trapezoidal shape of the outlet of the transition piece (4) is installed on the downstream side of the transition piece (4), the outlet side of the frame (11) which is formed into the inverted-trapezoidal shape is connected to the turbine-side stator vane part (14), and the floating seal materials (10a, 10b) are mounted on the upper and lower sides of the frame (11) and the side seal materials (10c, 10d) are mounted on the lateral sides thereof,
the notch (18) is formed in at least one of the floating seal materials (10a, 10b), the projection member (17) is fitted into the notch (18) and thereby at least one of the floating seal materials (10a, 10b) are fixed to the frame (11),
the floating seal materials (10a, 10b) are configured by a fix part (10a1, 10b1) which is fixed to the frame (11) and a seal part (10a2, 10b2) which seals between the coupled part of the frame (11) and the turbine-side stator vane part (14) and the seal part (10a2, 10b2) is fitted into a seal groove (14a) which is formed in the turbine-side stator vane part (14).

## Patentansprüche

1. Übergangsstückanordnung einer Verbrennungsvorrichtung, die Folgendes umfasst:
ein Übergangsstück (4);
einen Rahmen (11), der stromabseitig des Übergangsstücks (4) installiert ist; und
ein Dichtungselement (10, 10a, 10b, 10c, 10d), das an einem gekoppelten Teil des Rahmens (11) und einem turbinenseitigen Statorschaufelteil (14) installiert ist, wobei das Dichtungselement (10, 10a, 10b, 10c, 10d) eine Strömung von Druckluft von einem Kompressor zu einer Turbinenseite durch eine Lücke des gekoppelten Teils blockiert,
ein Vorsprungelement (12), das an einem Außenumfang des Rahmens (11) vorgesehen ist; und
einen Bewegungsunterdrückungsmechanismus (13), der an der Dichtung (10, 10a, 10b) vorgesehen ist und am Vorsprungelement (12) angebracht ist, um eine Bewegung der Dichtung (10, 10a, 10b) zu unterbinden, wodurch die Dichtung (10, 10a, 10b) am Rahmen (11) befestigt wird, **dadurch gekennzeichnet, dass**
das Vorsprungelement (12) in radialer Richtung des Übergangsstücks (4) verläuft und der Bewegungsunterdrückungsmechanismus (13) ein Durchgangsloch (13) ist, das mit dem Vorsprungelement (12) zusammenpasst, wobei das Vorsprungelement (12) in das Durchgangsloch (13) eingesetzt ist und dadurch das Dichtungselement (10a, 10b) am Rahmen (11) befestigt wird.

2. Gasturbinenverbrennungsvorrichtung, die Folgendes umfasst:
eine Übergangsstückanordnung, die ein Übergangsstück (4) enthält;
eine Übergangsstückströmungshülse (5), die um das Übergangsstück (4) vorgesehen ist;
eine Auskleidung (6), die mit dem Übergangsstück (4) verbunden ist; und
eine Auskleidungsströmungshülse (7), die um die Auskleidung (6) vorgesehen ist, wobei
die Übergangsstückanordnung nach Anspruch 1 als die genannte Übergangsstückanordnung eingesetzt wird.

3. Gasturbinenverbrennungsvorrichtung nach Anspruch 2, wobei
das Dichtungselement (10) schwimmende Dichtungsmaterialien (10a, 10b) und Seitendichtungsmaterialien (10c, 10d) enthält, das Übergangsstück (4) in einer zylindrischen Form bei einem Einlass des Verbrennungsgases und in einer umgekehrten Trapezform bei seinem Auslass gebildet ist, der Rahmen (11) einer Form, die mit der umgekehrten Trapezform des Auslasses des Übergangsstücks (4) zusammenpasst, stromabseitig des Übergangsstücks (4) installiert ist, die Auslassseite des Rahmens (11), der in der umgekehrten Trapezform gebildet ist, mit dem turbinenseitigen Statorschaufelteil (14) verbunden ist und die schwimmenden Dichtungsmaterialien (10a, 10b) auf der Oberseite und der Unterseite des Rahmens (11) montiert sind und die Seitendichtungsmaterialien (10c, 10d) auf seinen lateralen Seiten montiert sind,
das Durchgangsloch (13) in mindestens einem der schwimmenden Dichtungsmaterialien (10a, 10b) gebildet ist, das Vorsprungelement (12) in das Durchgangsloch (13) eingesetzt ist und dadurch mindestens eines der schwimmenden Dichtungsmaterialien (10a, 10b) am Rahmen (11) befestigt ist und
die schwimmenden Dichtungsmaterialien (10a, 10b) mit einem Befestigungsteil (10a1, 10b1), der am Rahmen (11) befestigt ist, und einem Dichtungsteil (10a2, 10b2), der zwischen dem gekoppelten Teil des Rahmens (11) und dem turbinenseitigen Statorschaufelteil (14) abdichtet, konfiguriert sind, und der Dichtungsteil (10a2, 10b2) in eine Dichtungsnut (14a), die im turbinenseitigen Statorschaufelteil (14) gebildet ist, eingesetzt ist.

4. Gasturbinenverbrennungsvorrichtung nach Anspruch 3, wobei
der Dichtungsteil (10a2, 10b2) mit der stromabwärts gelegenen Seite des Befestigungsteils (10a1, 10b1) verbunden ist und der Dichtungsteil (10a2, 10b2) ein Eingriffsstück ist, das sich von einem stromabseitigen Anschlussabschnitt des Befestigungsteils (10a1, 10b1) in einem rechten Winkel biegt und entlang einer Außenfläche des Auslassteils des Rahmens (11) zur stromabwärts gelegenen Seite verläuft.

5. Gasturbinenverbrennungsvorrichtung nach einem der Ansprüche 3 bis 4, wobei
das Vorsprungelement (12) in einer rechteckigen Parallelepipedform oder einer Säulenform gebildet ist und an einer Seitenflächenseite des Vorsprungelements (12) der rechteckigen Parallelepipedform ein Abrunden durchgeführt wurde.

6. Gasturbinenverbrennungsvorrichtung nach Anspruch 3, wobei
das Vorsprungelement (12) mittels eines Verschleißfestigkeitsstücks (15) in das Durchgangsloch (13) im Dichtungselement (10a, 10b) eingesetzt ist und dadurch das Dichtungselement am Rahmen (11) befestigt ist.

7. Gasturbinenverbrennungsvorrichtung nach Anspruch 6, wobei
das Vorsprungelement (12), das in der radialen Richtung des Übergangsstücks (4) verläuft, dünner als die Rahmenseite bei einem in Radiusrichtung vorderen Endstück gestaltet ist und dadurch ein abgestufter Teil (12c) gebildet wird, eine Bolzenschraube (12a) in das vordere Endstück des Vorsprungelements (12) geschraubt ist und das Dichtungselement (10a, 10b) mittels des Verschleißfestigkeitsstücks (15), das am vorderen Endstück des Vorsprungelements (12) vorgesehen ist, am abgestuften Teil (12c) des Vorsprungelements (12) durch Verschrauben einer Mutter (16) mit dem Bolzenschraubenteil (12a) befestigt ist.

8. Gasturbinenverbrennungsvorrichtung nach Anspruch 7, wobei
das Verschleißfestigkeitsstück (15) mit einer Abfallverhinderungsfläche (15a) versehen ist, die ein Abfallen mindestens eines der schwimmenden Dichtungsmaterialien (10a, 10b) verhindert, und die Abfallverhinderungsfläche (15a) auf einer Oberfläche (15a) des Verschleißfestigkeitsstücks (15) gebildet ist, die auf der gegenüberliegenden Seite einer Fläche, die mit der Mutter (16) befestigt ist, in Kontakt mit dem abgestuften Teil (12c) des Vorsprungelements (12).

9. Gasturbinenverbrennungsvorrichtung nach einem der Ansprüche 6 bis 8, wobei
ein Wurzelteil (12b) des Vorsprungelements (12) in einer rechteckigen Parallelepipedform gebildet ist und an einer Ecke einer Seitenflächenseite des Vorsprungelements (12) der rechteckigen Parallelepipedform ein Abrunden durchgeführt wurde.

10. Übergangsstückanordnung einer Verbrennungsvorrichtung, die Folgendes umfasst:
ein Übergangsstück (4);
einen Rahmen (11), der stromabseitig des Übergangsstücks (4) installiert ist;
ein Dichtungselement (10, 10a, 10b, 10c, 10d), das an einem gekoppelten Teil des Rahmens (11) und einem turbinenseitigen Statorschaufelteil (14) installiert ist, wobei das Dichtungselement (10, 10a, 10b, 10c, 10d) ein Strömen von Druckluft von einem Kompressor zu einer Turbinenseite durch eine Lücke des gekoppelten Teils blockiert;
ein Vorsprungelement (17), das stromaufseitig des Rahmens (11) vorgesehen ist; und
einen Bewegungsunterdrückungsmechanismus (18), der an der Dichtung (10a, 10b) vorgesehen ist und am Vorsprungelement (17) angebracht ist, um eine Bewegung der Dichtung (10a, 10b) zu unterbinden, wodurch die Dichtung (10a, 10b) am Rahmen (11) befestigt wird, wobei das Vorsprungelement (17) zur stromaufwärts gelegenen Seite einer Gasdurchflussrichtung des Übergangsstücks (4) verläuft, der Bewegungsunterdrückungsmechanismus (13) eine Kerbe (18) ist, die mit dem Vorsprungelement (17) zusammenpasst, und das Vorsprungelement (17) in die Kerbe (18) eingesetzt ist und dadurch das Dichtungselement (10a, 10b) am Rahmen (11) befestigt wird, **dadurch gekennzeichnet, dass**
ein Verschraubungsloch in einem vorderen Endstück des Vorsprungelements (17) gebildet ist, ein Abfallverhinderungsstück (19) am Vorsprungelement (17) vorgesehen ist und eine Seite des Abfallverhinderungsstücks (19) einen Teil des Dichtungselements (10a, 10b) abdeckt, wodurch ein Abfallen des Dichtungselements (10a, 10b) in der radialen Richtung des Übergangsstücks (4) verhindert wird, und das Ende auf der anderen Seite des Abfallverhinderungsstücks (19) gemeinsam mit dem Vorsprungelement (17) über das Verschraubungsloch mit einer Schraube (22) und einer Mutter (21) befestigt ist.

11. Gasturbinenverbrennungsvorrichtung, die Folgendes umfasst:
eine Übergangsstückanordnung, die ein Übergangsstück (4) enthält;
eine Übergangsstückströmungshülse (5), die um das Übergangsstück (4) vorgesehen ist;
eine Auskleidung (6), die mit dem Übergangsstück (4) verbunden ist; und
eine Auskleidungsströmungshülse (7), die um die Auskleidung (6) vorgesehen ist, wobei
die Übergangsstückanordnung nach Anspruch 10 als die genannte Übergangsstückanordnung eingesetzt wird.

12. Gasturbinenverbrennungsvorrichtung nach Anspruch 11, wobei
das Vorsprungelement (17), das zur stromaufwärts gelegenen Seite der Gasdurchflussrichtung des Übergangsstücks (4) verläuft, mit dem Rahmen (11) einteilig gebildet ist oder durch Schweißen am Rahmen (11) befestigt ist.

13. Gasturbinenverbrennungsvorrichtung nach einem der Ansprüche 11 bis 12, wobei
das Dichtungselement (10) schwimmende Dichtungsmaterialien (10a, 10b) und Seitendichtungsmaterialien (10c, 10d) enthält, das Übergangsstück (4) in einer zylindrischen Form bei einem Einlass des Verbrennungsgases und in einer umgekehrten Trapezform bei seinem Auslass gebildet ist, der Rahmen (11) einer Form, die mit der umgekehrten Trapezform des Auslasses des Übergangsstücks (4) zusammenpasst, stromabseitig des Übergangsstücks (4) installiert ist, die Aüslassseite des Rahmens (11), der in der umgekehrten Trapezform gebildet ist, mit dem turbinenseitigen Statorschaufelteil (14) verbunden ist und die schwimmenden Dichtungsmaterialien (10a, 10b) auf der Oberseite und der Unterseite des Rahmens (11) montiert sind und die Seitendichtungsmaterialien (10c, 10d) auf seinen lateralen Seiten montiert sind,
die Kerbe (18) in mindestens einem der schwimmenden Dichtungsmaterialien (10a, 10b) gebildet ist, das Vorsprungelement (17) in die Kerbe (18) eingesetzt ist und dadurch mindestens eines der schwimmenden Dichtungsmaterialien (10a, 10b) am Rahmen (11) befestigt ist, und
die schwimmenden Dichtungsmaterialien (10a, 10b) mit einem Befestigungsteil (10al, 10b1), der am Rahmen (11) befestigt ist, und einem Dichtungsteil (10a2,"10b2), der zwischen dem gekoppelten Teil des Rahmens (11) und dem turbinenseitigen Statorschaufelteil (14) abdichtet, konfiguriert sind, und der Dichtungsteil (10a2, 10b2) in eine Dichtungsnut (14a), die im turbinenseitigen Statorschaufelteil (14) gebildet ist, eingesetzt ist.

## Revendications

1. Assemblage formant pièce de transition d'une unité de combustion, comprenant :
une pièce de transition (4) ;
un cadre (11) installé sur le côté aval de la pièce de transition (4) ; et
un élément de joint (10, 10a, 10b, 10c, 10d) installé sur une partie couplée du cadre (11) et sur une partie d'aube de stator côté turbine (14), l'élément de joint (10, 10a, 10b, 10c, 10d) bloquant l'écoulement d'air comprimé depuis un compresseur jusqu'à un côté turbine via un intervalle de la partie couplée,
un élément en projection (12) prévu sur une circonférence extérieure du cadre (11) ; et
un mécanisme de suppression de mouvement (13) prévu sur le joint: (10, 10a, 10b) et engagé sur l'élément en projection (12) de manière à supprimer un mouvement du joint (10, 10a, 10b), en fixant ainsi le joint (10, 10a, 10b) sur le cadre (11), **caractérisé en ce que**
l'élément en projection (12) s'étend dans une direction radiale de la pièce de transition (4) et le mécanisme de suppression de mouvement (13) est un trou traversant (13) qui est accordée à l'élément en projection (12), l'élément en projection (12) est engagé dans le trou traversant (13) et ainsi l'élément de joint (10a, 10b) est fixé sur le cadre (11).

2. Unité de combustion pour turbine à gaz comprenant :
un assemblage formant pièce de transition incluant une pièce de transition (4) ;
un manchon d'écoulement de pièce de transition (5) prévu autour de la pièce de transition (4) ;
un doublage (6) connecté à la pièce de transition (4) ; et
un manchon d'écoulement de doublage (7) prévu autour du doublage (6),
dans laquelle l'assemblage formant pièce de transition selon la revendication 1 est employé à titre d'assemblage formant pièce de transition précité.

3. Unité de combustion pour turbine à gaz selon la revendication 2,
dans laquelle l'élément de joint (10) inclut des matériaux de joint flottants (10a, 10b) et des matériaux de joint latéraux (10c, 10d), la pièce de transition (4) est formée sous une forme cylindrique au niveau d'une entrée des gaz de combustion et sous une forme trapézoïdale inversée au niveau de leur sortie, le cadre (11) ayant une forme qui s'accorde à la forme trapézoïdale inversée de la sortie de la pièce de transition (4) est installé sur le côté aval de la pièce de transition (4), le côté de sortie du cadre (11) qui est formé sous la forme trapézoïdale inversée est connecté à la partie d'aube de stator côté turbine (14), et les matériaux de joint flottants (10a, 10b) sont montés sur le côté supérieur et sur le côté inférieur du cadre (11) et les matériaux de joint latéraux (10c, 10d) sont montés sur les côtés latéraux de celui-ci,
le trou traversant (3) est formé dans l'un au moins des matériaux de joint flottants (10a, 10b), l'élément en projection (12) et engagé dans le trou traversant (13) et de ce fait l'un au moins des matériaux de joint flottants (10a, 10b) est fixé sur le cadre (11),
les matériaux de joint flottants (10a, 10b) sont configurés par une partie fixe (10a1, 10b1) qui est fixée sur le cadre (11) et par une partie de joint (10a2, 10b2) qui effectue une étanchéité entre la partie couplée du cadre (11) et la partie d'aube de stator côté turbine (14), et la partie de joint (10a2,10b2) est engagée dans une gorge de joint (14a) qui est formée dans la partie d'aube de stator côté turbine (14).

4. Unité de combustion pour turbine à gaz selon la revendication 3,
dans laquelle la partie de joint (10a2, 10b2) est connectée au côté aval de la partie fixe (10a1, 10b1) et la partie de joint (10a2, 10b2) est une pièce d'engagement qui se cintre à angle droit depuis une portion terminale côté aval de la partie fixe (10a1, 10b1) et qui s'étend vers le côté aval le long d'une surface extérieure de la partie de sortie du cadre (11).

5. Unité de combustion pour turbine à gaz selon l'une quelconque des revendications 3 et 4,
dans laquelle l'élément en projection (12) est formé sous une forme parallélépipédique rectangulaire ou sous la forme d'une colonne et un arrondi est ménagé sur un côté de face latérale de l'élément en projection (12) de la forme parallélépipédique rectangulaire.

6. Unité de combustion pour turbine à gaz selon la revendication 3,
dans laquelle l'élément en projection (12) est engagé dans le trou traversant (13) dans l'élément de joint (10a, 10b) via une pièce résistant à l'usure (15) et l'élément de joint est ainsi fixé sur le cadre (11).

7. Unité de combustion pour turbine à gaz selon la revendication 6,
dans laquelle l'élément en projection (12) qui s'étend dans la direction radiale de la pièce de transition (4) est réalisé plus mince que le côté du cadre au niveau d'une partie terminale en tête en direction radiale et il se forme ainsi une partie en gradin (12c), une vis mâle (12a) est vissée dans la partie terminale de tête de l'élément en projection (12) et l'élément de joint (10a, 10b) est fixé sur la partie en gradin (12c) de l'élément en projection (12) via la pièce résistant à l'usure (15) qui est prévue au niveau de la partie terminale de tête de l'élément en projection (12) en fixant un écrou (16) avec la partie de vis mâle (12a).

8. Unité de combustion pour turbine à gaz selon la revendication 7,
dans laquelle la pièce résistant à l'usure (15) est dotée d'une face antichute (15a) qui empêche la chute de l'un au moins des matériaux de joint flottants (10a, 10b), et la face antichute (15a) est formée sur une face (15a) de la pièce résistant à l'usure (15) qui est en contact avec la partie en gradin (12c) de l'élément en projection (12) sur le côté opposé d'une face qui est fixée avec l'écrou (16).

9. Unité de combustion pour turbine à gaz selon l'une quelconque des revendications 6 à 8,
dans laquelle une partie de racine (12b) de l'élément en projection (12) est formée sous une forme parallélépipédique rectangulaire et un arrondi est ménagé sur un coin d'une face latérale de l'élément en projection (12) de forme parallélépipédique rectangulaire.

10. Assemblage formant pièce de transition d'une unité de combustion, comprenant :
une pièce de transition (4) ;
un cadre (11) installé sur le côté aval de la pièce de transition (4) ; et
un élément de joint (10, 10a, 10b, 10c, 10d) installé sur une partie couplée du cadre (11) et une partie d'aube de stator côté turbine (14), l'élément de joint (10, 10a, 10b, 10c, 10d) bloquant l'écoulement d'air comprimé depuis un compresseur vers un côté turbine à travers un intervalle de la partie couplée,
un élément en projection (17) prévu au niveau du côté amont du cadre (11); et
un mécanisme de suppression de mouvement (18) prévu sur le joint (10a, 10b) est engagé sur l'élément en projection (17) de manière à supprimer un mouvement du joint (10a, 10b), en fixant ainsi le joint (10a, 10b) sur le cadre (11), dans lequel l'élément en projection (17) s'étend vers le côté amont en direction d'écoulement du gaz de la pièce de transition (4), le mécanisme de suppression de mouvement (18) est une encoche (18) qui est accordée avec l'élément en projection (17), et l'élément en projection (17) est engagé dans l'encoche (18) et l'élément de joint (10a, 10b) est ainsi fixé sur le cadre (11),
**caractérisé en ce que**
un trou destiné à un boulon est formé dans une partie terminale de tête de l'élément en projection (17), une pièce antichute (19) est prévue au niveau de l'élément en projection (17), et un côté de la pièce antichute (19) couvre une partie de l'élément de joint (10a, 10b) en empêchant ainsi une chute de l'élément de joint (10a, 10b) dans la direction radiale de la pièce de transition (4) et une autre extrémité latérale de la pièce antichute (19) est fixée conjointement avec l'élément en projection (17) avec un boulon (22) et un écrou (21) via le trou destiné à un boulon.

11. Unité de combustion pour turbine à gaz comprenant :
un assemblage formant pièce de transition incluant une pièce de transition (4) ;
un manchon d'écoulement pour pièce de transition (5) prévu autour de la pièce de transition (4) ;
un doublage (6) connecté à la pièce de transition (4) ; et
un manchon d'écoulement de doublage (7) prévu autour du doublage (6),
dans laquelle l'assemblage formant pièce de transition selon la revendication 10 est employé à titre d'assemblage formant pièce de transition précité.

12. Unité de combustion pour turbine à gaz selon la revendication 11,
dans laquelle l'élément en projection (17) qui s'étend jusqu'au côté amont dans la direction d'écoulement du gaz de la pièce de transition (4) est formé de manière intégrale avec le cadre (11) ou est fixé au cadre (11) par soudure.

13. Unité de combustion pour turbine à gaz selon l'une quelconque des revendications 11 et 12,
dans laquelle l'élément de joint (10) inclut des matériaux de joint flottants (10a, 10b) et des matériaux de joints latéraux (10c, 10d), la pièce de transition (4) est formée sous une forme cylindrique au niveau d'une entrée des gaz de combustion et sous une forme trapézoïdale inversée au niveau d'une sortie de ceux-ci, le cadre (11) ayant une forme qui s'accorde à la forme trapézoïdale inversée de la sortie de la pièce de transition (4) est installé sur le côté aval de la pièce de transition (4), le côté de sortie du cadre (11) qui est formé sous la forme trapézoïdale inversée est connecté à la partie d'aube de stator côté turbine (14), et les matériaux de joint flottants (10a, 10b) sont montés sur le côté supérieur et le côté inférieur du cadre (11) et les matériaux de joint latéraux (10c, 10b) sont montés sur les côtés latéraux de ceux-ci,
l'encoche (18) est formée dans l'un au moins des matériaux de joint flottants (10a, 10b), l'élément en projection (17) est engagé dans l'encoche (18) et ainsi l'un au moins des matériaux de joint flottants (10a, 10b) est engagé sur le cadre (11),
les matériaux de joint flottants (10a, 10b) sont configurés par une partie fixe (10a1, 10b1)qui est fixée au cadre (11) par et une partie de joint (10a2, 10b2) qui effectue une étanchéité entre la partie couplée du cadre (11) et la partie d'aube de stator côté turbine (14), et la partie de joint (10a2, 10b2) est engagée dans une gorge de joint (14a) qui est formée dans la partie d'aube de stator côté turbine (14).
